# FASCICULE DE BREVET EUROPEEN

(11) **EP 2 798 979 B1**
(45) Date de publication et mention de la délivrance du brevet: **23.03.2016**
(21) Numéro de dépôt: 14166557.0
(22) Date de dépôt: 30.04.2014
(51) Int. Cl.: A47C 27/00, B29C 70/70, B29C 65/74, B29C 51/08, B29C 69/00, B29C 51/12, B29C 51/44, B29D 99/00, B29K 27/06, B29K 101/12, B29L 31/58, B29C 65/00, B29C 65/04, B29C 65/18, B29C 65/08, A47C 27/14, A47C 31/02, B29C 51/10, B29C 51/26, B29L 31/00

(54) **Procédé de fabrication d'un matelas étanche et matelas étanche ainsi obtenu**
Herstellungsverfahren einer dichten Matte, und so erhaltene dichte Matte
Method for manufacturing a sealed mattress and sealed mattress thus obtained

(30) Priorité: 03.05.2013 FR 1354084
(43) Date de publication de la demande: 05.11.2014
(73) Titulaire: Yves Moillo, 69800 Saint-Priest (FR); RTS Chapuis, 69720 Saint Bonnet de Mure (FR)
(72) Inventeur: Moillo, Yves M., 69280 Sainte-Consorce (FR)
(74) Mandataire: Thibault, Jean-Marc

(56) Documents cités:
- EP-A1- 0 653 279
- DE-A1-102009 031 372
- DE-U1-202005 020 884
- GB-A- 2 269 830
- US-A1- 2011 111 099

## Description

La présente invention concerne le domaine technique de la fabrication de matelas étanches au sens général et elle vise en particulier les matelas étanches pour chariots brancards, pour le transport et le secours, et en particulier pour les brancards d'ambulances et autres véhicules de secours.

Dans certaines applications, il apparaît le besoin de disposer d'un matelas à caractère étanche pe>rmettant une désinfection élevée et la réduction des infections croisées. Tel est le cas par exemple des matelas articulés pour brancards d'ambulances et autres véhicules de secours.

D'une manière générale, un tel matelas comporte plusieurs parties formant coussins reliées entre elles par des zones d'articulation adaptées pour supporter les diverses régions du corps d'une personne allongée sur un tel matelas. Ce matelas comporte un revêtement de dessus et un revêtement de dessous à l'intérieur desquels est placé un matériau de rembourrage conformé pour réaliser les différentes parties formant les coussins. Les revêtements de dessus et de dessous qui sont généralement en matière plastique sont assemblés entre eux à l'aide de coutures.

Il est à noter que la réalisation des zones d'articulation de moindre épaisseur par rapport aux parties formant un coussin conduit à la présence de plis ou de replis dans les revêtements entraînant une difficulté évidente pour la désinfection. Par ailleurs, le caractère étanche d'un tel matelas disparaît relativement rapidement compte tenu de ses conditions d'utilisation extrêmes et intensives et des opérations répétées de désinfection.

Il apparaît ainsi le besoin de pouvoir disposer d'un matelas à caractère étanche, durable dans le temps tout en étant relativement facile à nettoyer ou à désinfecter.

Le brevet EP 0 653 279 décrit un procédé de fabrication d'une selle consistant à thermoformer une feuille thermoplastique et à remplir l'empreinte en creux de la coque thermoformée par un gel précurseur d'un matériau solide de rembourrage. Un tel procédé n'est pas adapté pour permettre de réaliser une pièce étanche en plusieurs parties.

Le brevet DE 102009 031372 décrit un procédé pour réaliser un matelas de gel consistant à chauffer deux films de matière plastique pour produire un sac fermé hermétiquement à sa périphérie, à l'exception d'une partie destinée à être utilisée comme orifice d'injection d'une solution monomère qui après chauffage, devient un gel. Un tel procédé ne permet pas de réaliser un matelas à plusieurs coussins, étanche durable dans le temps et facile à nettoyer et désinfecter.

L'objet de la présente invention vise donc à remédier aux inconvénients de l'art antérieur en proposant un nouveau procédé de fabrication permettant de réaliser un matelas complètement étanche durable dans le temps et facile à désinfecter ou à nettoyer.

Pour atteindre un tel objectif, le procédé de fabrication d'un matelas étanche selon l'invention comporte au moins deux parties formant coussins, reliées entre elles par une zone d'articulation.

Selon l'invention, le procédé comporte les étapes suivantes :
- thermoformer au moins une feuille thermoplastique afin de réaliser une coque thermoformée souple ou semi-rigide comportant au moins deux empreintes en creux pourvues d'une bordure périmétrique dont certaines parties relient entre elles les empreintes en creux, les deux empreintes s'ouvrant selon une même face de la coque ainsi formée et présentant une forme correspondant au moins partiellement aux parties du matelas formant coussin,
- remplir les empreintes en creux de la coque thermoformée par un matériau solide de rembourrage,
- réaliser une soudure continue sur au moins toute la périphérie de chaque empreinte, entre la coque et une feuille soudable, recouvrant la coque pour fermer les empreintes en creux,
- et découper le surplus de matière de la coque et de la feuille soudable.

De plus, le procédé selon l'invention peut consister en outre en combinaison au moins l'une et/ou l'autre des caractéristiques additionnelles suivantes :
- à réaliser simultanément les opérations de soudure et de découpe,
- à thermoformer la feuille thermoplastique afin que la forme des empreintes en creux corresponde à la forme définitive des parties du matelas,
- à recouvrir la coque thermoformée à l'aide d'une feuille soudable pré-équipée de systèmes de fixation,
- à réaliser des découpes ou ouvertures dans la zone d'articulation et une soudure entourant chacune de ces découpes ou ouvertures,
- à équiper la coque thermoformée de systèmes de fixation.

Un autre objet de l'invention est de proposer un matelas étanche durable dans le temps facilement nettoyable ou désinfectable.

Pour atteindre un tel objectif, le matelas étanche comporte au moins deux parties formant coussins reliées par une zone d'articulation.

Selon l'invention, le matelas comporte une coque thermoformée présentant au moins deux empreintes formant par leur fond une première face du matelas, les empreintes étant reliées entre elles par une zone périmétrique de jonction et remplies par un matériau solide, le matelas étanche comportant une feuille soudable formant une deuxième face du matelas, et soudées à la coque par une soudure continue formant une lèvre d'assemblage s'étendant au moins sur toute la périphérie de chaque empreinte, la lèvre d'assemblage s'étendant en saillie par rapport au matelas.

De plus, le matelas selon l'invention peut comporter en outre en combinaison au moins l'une et/ou l'autre des caractéristiques additionnelles suivantes :
- la lèvre d'assemblage s'étend sensiblement au niveau de la deuxième face du matelas,
- la zone d'articulation s'étend sensiblement au niveau de la deuxième face du matelas,
- chaque empreinte de la coque thermoformée se présente sous la forme d'une structure monobloc pourvue d'un fond se prolongeant par une paroi latérale périphérique dépourvue de plis.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue de dessus d'un exemple de réalisation d'un matelas étanche conforme à l'invention.
La **Figure 1A** est une vue de côté du matelas étanche illustré à la **Fig. 1****.**
La **Figure 2A** est une vue de côté d'un exemple de moule de thermoformage mis en oeuvre dans le procédé de fabrication conforme à l'invention.
La **Figure 2B** est une vue de dessus d'un moule de thermoformage illustré à la **Fig. 2A****.**
La **Figure 3** est une vue en coupe élévation montrant une étape de thermoformage mis en oeuvre dans le procédé de fabrication conforme à l'invention.
La **Figure 4** est une vue de la coque thermoformée obtenue après l'opération de thermoformage.
La **Figure 5** illustre un exemple d'outillage pour une opération de soudure mise en oeuvre dans le procédé de fabrication conforme à l'invention.
La **Figure 6** est une vue en coupe élévation montrant la mise en place de la coque thermoformée à l'intérieur d'une électrode de soudage.
La **Figure 7** illustre l'opération de remplissage en matériau de rembourrage de la coque thermoformée mise en oeuvre dans le cadre du procédé de fabrication conforme à l'invention.
Les **Figures 8, 9** et **10** illustrent différentes phases caractéristiques de l'étape de soudure mises en oeuvre dans le procédé de fabrication conforme à l'invention.
La **Figure 11** est une vue en coupe à grande échelle d'un détail caractéristique du matelas obtenu selon le procédé de fabrication conforme à l'invention.

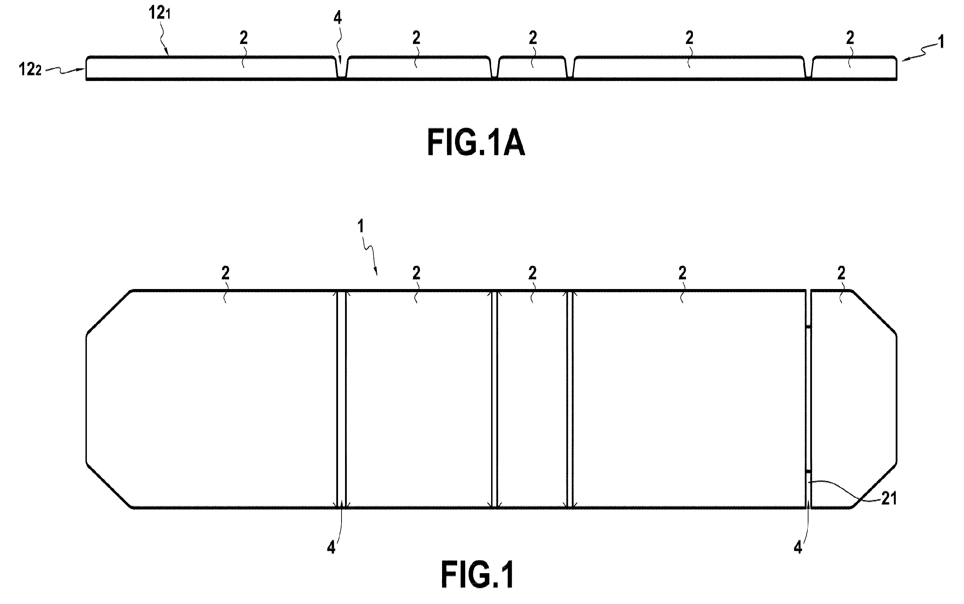

Tel que cela ressort plus précisément des **Fig. 1** et **1A****,** l'objet de l'invention concerne un matelas étanche **1** comportant au moins deux, et dans l'exemple illustré cinq parties **2** formant des coussins de réception pour les différentes régions du corps d'une personne. Les parties formant coussins **2** s'étendent les unes à côté des autres de sorte que deux parties **2** voisines sont reliées entre elles par des zones d'articulation **4.** Ainsi, les zones d'articulation **4** s'étendent sensiblement parallèlement les unes aux autres permettant un pivotement relatif entre les parties voisines formant coussins **2.** Dans l'exemple illustré, le matelas étanche **1** présente une forme générale rectangulaire mais il est clair que les différentes parties formant coussins **2** peuvent présenter des formes diverses. De plus, dans l'exemple illustré, le matelas étanche **1** comporte cinq parties **2** formant coussins mais il est clair que le nombre de coussins peut être différent.

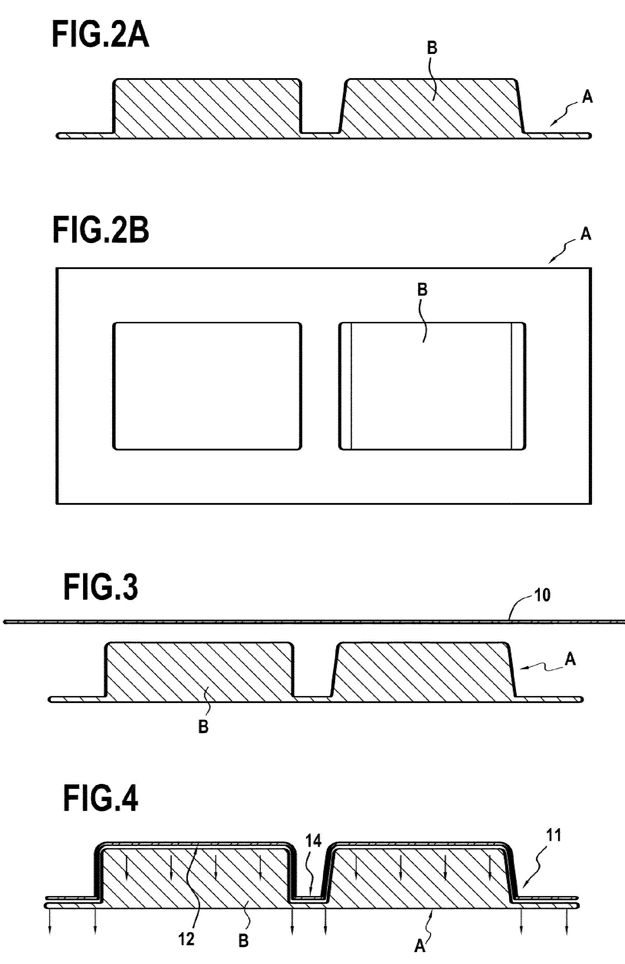

Le matelas étanche **1** selon l'invention est fabriqué de la manière suivante conformément aux **Fig. 2A** à **10****.**

La fabrication du matelas étanche **1** comporte une étape de thermoformage d'au moins une feuille thermoplastique **10** afin de réaliser une coque thermoformée **11** à caractère souple ou semi-rigide. Cette coque thermoformée **11** comporte des empreintes en creux **12** en nombre égal ou non au nombre de parties formant coussin **2** (**Fig. 2**). Ainsi, selon une variante de réalisation, cette coque thermoformée **11** est réalisée à partir d'une feuille thermoformée dans laquelle sont aménagées le nombre total d'empreintes formant coussin **2.** Une autre solution consiste à réaliser plusieurs coques thermoformées **11** comportant ensemble le nombre total d'empreintes en creux correspondant au nombre de parties **2** formant coussins. Ces coques thermoformées **11** sont ensuite assemblées ensemble comme cela sera décrit plus en détail dans la suite de la description.

Tel que cela ressort plus précisément des **Fig. 2A** et **2B****,** cette étape de thermoformage met en oeuvre notamment un moule de thermoformage **A** pourvu d'empreintes saillantes **B** adaptées pour réaliser les empreintes en creux **12.** Bien entendu, la forme et les dimensions des empreintes saillantes **B** sont adaptées à la forme et aux dimensions des empreintes en creux **12** à obtenir.

La feuille thermoplastique **10** est une feuille par exemple en PVC (polychlorure de vinyle) ou autres matériaux plastiques thermoformables. Classiquement, cette feuille thermoplastique **10** est chauffée pour être ramollie en vue d'être mise en forme avec un moule. Bien entendu, cette opération de thermoformage peut être réalisée à l'aide de n'importe quelle technique classique de thermoformage, par exemple, par le vide, sous pression, double coque, etc..

Tel que cela ressort plus précisément des **Fig**. **3, 4****,** et **6****,** l'opération de thermoformage de la feuille thermoplastique **10** permet d'obtenir une coque thermoformée **11** dont les empreintes en creux **12** s'ouvrent selon une même face de la coque. Ces empreintes en creux **12** sont pourvues à la périphérie de leur ouverture, d'une bordure périmétrique **14** dont certaines parties **14₁** relient entre elles les empreintes en creux **12** voisines. A l'opposé de leur ouverture, chaque empreinte en creux **12** présente un fond **12₁** généralement plat à partir duquel s'élève une paroi latérale périphérique **12₂.**

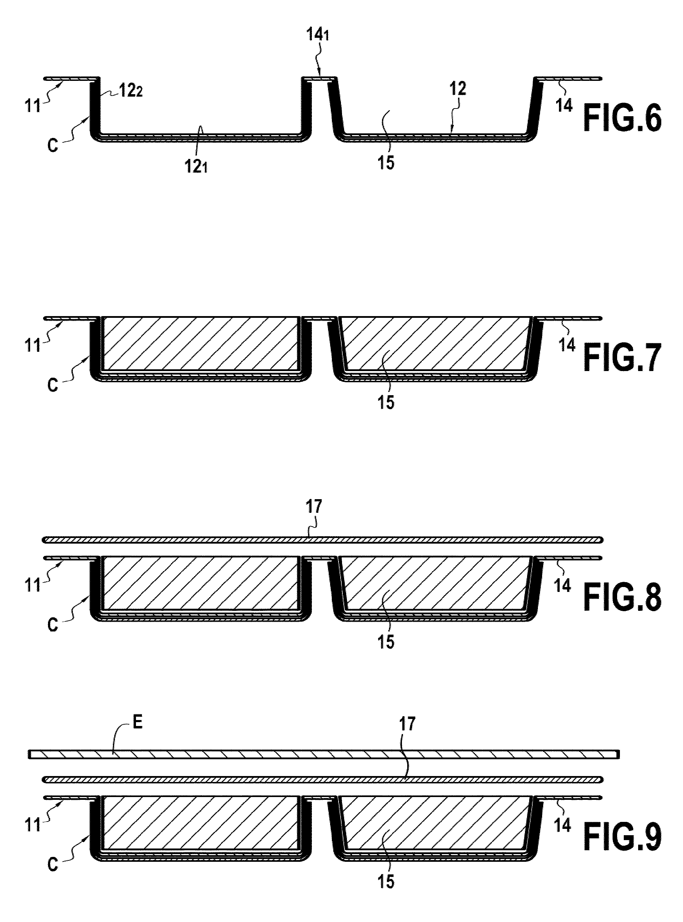

Le procédé selon l'invention consiste ensuite à remplir les empreintes en creux **12** à l'aide d'un matériau de rembourrage solide **15** (**Fig. 7**). En tant que matériau de rembourrage solide, il peut être prévu d'utiliser un matériau alvéolaire, de la mousse en plaque découpée ou de la mousse injectée. Dans le cas où le matériau de remplissage n'est pas ignifuge, il est à noter qu'il peut être envisagé d'envelopper le matériau de rembourrage **15** à l'aide d'une enveloppe de protection ignifuge.

Le procédé selon l'invention comporte également une étape de réalisation d'une soudure continue **16** sur au moins toute la périphérie de chaque empreinte en creux **12,** entre la coque **11** et une feuille soudable **17.** Cette soudure **16** peut être réalisée de toute manière appropriée. Par exemple, cette soudure est réalisée par ultrasons, par lame chauffante ou comme dans l'exemple illustré, par haute fréquence.

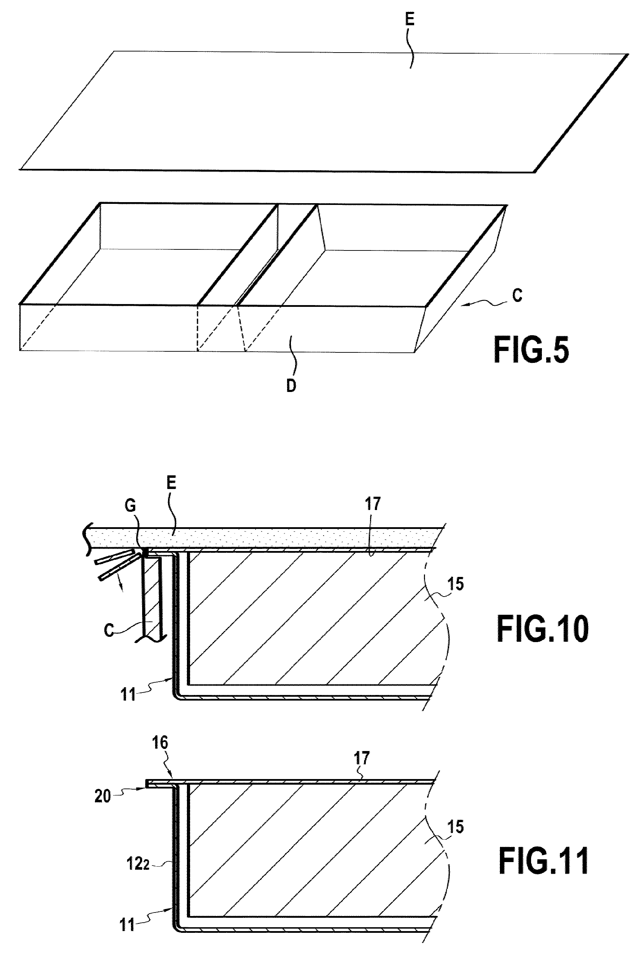

Dans l'exemple de réalisation, l'opération de soudure met en oeuvre un outillage comportant une électrode de soudage **C** pourvue d'empreintes en creux **D** adaptées pour recevoir les empreintes en creux **12** de la coque thermoformée **11** (**Fig. 5** et **6**).

Il est à noter que dans l'exemple illustré, le matériau de rembourrage **15** est positionné à l'intérieur des empreintes en creux **12** de la coque thermoformée **11** lorsque la coque est positionnée à l'intérieur de l'électrode de soudage **C.** Bien entendu, l'opération de remplissage des empreintes en creux **12** de la coque thermoformée **11** peut être réalisée de manière différente.

Tel que cela ressort plus précisément de la **Fig. 8**, la feuille soudable **17** est positionnée pour recouvrir la coque thermoformée **11** et fermer ainsi les empreintes en creux **12.** Par ailleurs, il est à noter que les dimensions de la feuille soudable **17** sont telles qu'elle déborde des empreintes en creux **12** pour s'étendre en vis-à-vis ou en regard de la bordure périmétrique **14** bordant les empreintes en creux.

Dans l'exemple de réalisation, l'étape de soudure consiste à placer de part et d'autre de cette bordure périmétrique **14** et de la feuille soudable, la première électrode **C** et une deuxième électrode **E** pour permettre de réaliser l'assemblage de la feuille soudable **17** avec la coque thermoformée **11.** Dans l'exemple illustré, la deuxième électrode **E** est une plaque s'étendant en relation de la feuille soudable **17** tandis que la première électrode **C** présente une forme adaptée pour entourer chaque empreinte en creux **12** de la coque thermoformée **11.** La première électrode **C** possède un aplat venant en contact avec la bordure périmétrique **14** de la coque thermoformée qui se trouve en contact avec la feuille soudable **17** sollicitée par la deuxième électrode **E.** Lors du rapprochement relatif entre les deux électrodes **C, E,** il est réalisée une soudure à haute fréquence entre les deux électrodes **C, E** de sorte qu'il est obtenu une soudure continue **16** à la périphérie de chaque empreinte en creux **12** entre la bordure périmétrique **14** et la feuille soudable **17.** Le matelas obtenu présente ainsi une étanchéité complète.

Le procédé selon l'invention consiste ensuite à découper le surplus de matière de la coque **11** et de la feuille soudable **17** comme cela ressort clairement de la **Fig. 10****.**

Selon une variante préférée de réalisation, le procédé consiste à réaliser simultanément les opérations de soudure et de découpe. A cet effet, la première électrode **C** comporte une lame de découpe **G** permettant lors du rapprochement relatif entre les électrodes **C** et **E,** d'obtenir la découpe du surplus de matière.

Il est à noter que cette opération de soudure peut être réalisée à partir d'une coque thermoformée **11** et d'une feuille soudable **17.** Dans le cas où le matelas à réaliser nécessite le recours à plusieurs coques thermoformées **11** afin d'obtenir le nombre total de coussins **2,** il peut être envisagé de placer côte à côte les coques thermoformées avec les bordures périmétriques voisines des coques qui se chevauchent de manière à permettre leur soudure avec la feuille soudable **17.**

Tel que cela ressort plus précisément des **Fig. 1, 1A** et **11****,** le matelas étanche **1** comporte ainsi une coque thermoformée **11** souple ou semi-rigide présentant au moins deux et dans l'exemple illustré, cinq empreintes **2** dont leurs fonds **12₁** forment une première face du matelas. Ce matelas comporte une feuille soudable **17** formant la deuxième face du matelas. Ces empreintes formant les coussins **2** sont reliées entre elles par une zone de jonction et d'articulation **4.** Comme expliqué ci-dessus, une zone d'articulation **4** correspond à la partie de la bordure périmétrique **14,** commune à deux coussins **2** voisins et placée en position de superposition avec la feuille soudable **17.** Cette zone d'articulation **4** comporte donc deux soudures **16** bordant les empreintes en creux délimitant deux coussins **2** voisins.

En dehors des zones d'articulation **4,** la bordure périmétrique **14** qui est soudée à la feuille **17** forme une lèvre **20** d'assemblage s'étendant sur au moins toute la périphérie du matelas **1.** La lèvre d'assemblage **20** s'étend comme illustrée à la **Fig. 11** en saillie par rapport au matelas et en particulier par rapport à la paroi latérale périphérique **12₂.** Cette lèvre d'assemblage **20** est formée par une partie de la feuille soudable **17** et la bordure périmétrique **14** de la coque thermoformée **11.**

Dans l'exemple illustré, la lèvre d'assemblage **20** s'étend sensiblement au niveau de la deuxième face du matelas c'est-à-dire au niveau de la feuille soudable **17.**

De même selon cet exemple de réalisation, les zones d'articulation **4** entre les parties formant coussins **2** s'étendent sensiblement au niveau de la deuxième face du matelas.

Chaque empreinte en creux **12** de la coque thermoformée **11** se présente ainsi sous la forme d'une structure monobloc pourvue d'un fond **12₁** se prolongeant par une paroi latérale périphérique **12₂.** Compte tenu de sa conformation par thermoformage, la paroi latérale périphérique **12₂** ne comporte pas de plis ou de replis. Le matelas **1** présente ainsi une surface extérieure complètement lisse à l'exception de la lèvre périphérique **16** qui si elle est saillante ne comporte pas non plus de plis ou de replis.

Selon une variante de réalisation, il peut être prévu de pré-équiper la feuille soudable **17** à l'aide de systèmes de fixation du matelas à une structure fixe telle qu'à un brancard en particulier. Par exemple, en tant que système de fixation, la feuille soudable **17** peut être équipée de bandes de fixation auto-accrochantes, de pattes ou de crochets.

Selon une autre variante de réalisation, il peut être envisagé d'équiper la coque préformée **11** de tels systèmes de fixation.

Sur la **Fig. 1****,** trois zones d'articulation **4** des coussins **2** s'étendent sur toute la largeur du matelas. Il est à noter qu'il peut être prévu de réaliser des ouvertures ou comme illustré à la **Fig. 1****,** des découpes **21** dans cette zone d'articulation, aménagées à partir du bord extérieur du matelas. De telles ouvertures ou découpes **21** permettent par exemple le passage de sangles de fixation ou de maintien. Bien entendu, chaque découpe ou ouverture **21** est entourée par une soudure continue **16** réalisée par la forme complémentaire donnée aux électrodes dans l'exemple illustré.

Dans l'exemple de réalisation illustré, les coussins **2** possèdent une forme générale parallélépipédique. Bien entendu, les coussins peuvent présenter diverses formes adaptées à la morphologie du corps humain.

L'invention n'est pas limitée aux exemples décrits et représentés car diverses modifications peuvent y être apportées sans sortir de son cadre.

## Revendications

1. Procédé de fabrication d'un matelas étanche (**1**) comportant au moins deux parties formant coussins (**2**), reliées entre elles par une zone d'articulation (**4**), **caractérisé en ce qu'**il comporte les étapes suivantes :
- thermoformer au moins une feuille thermoplastique (**10**) afin de réaliser une coque thermoformée souple ou semi-rigide (**11**) comportant au moins deux empreintes en creux (**12**) pourvues d'une bordure périmétrique (**14**) dont certaines parties relient entre elles les empreintes en creux, les deux empreintes s'ouvrant selon une même face de la coque ainsi formée et présentant une forme correspondant au moins partiellement aux parties du matelas formant coussin,
- remplir les empreintes en creux (**12**) de la coque thermoformée (**11**) par un matériau solide de rembourrage (**15**),
- réaliser une soudure continue sur au moins toute la périphérie de chaque empreinte, entre la coque et une feuille soudable (**17**), recouvrant la coque pour fermer les empreintes en creux (**12**),
- et découper le surplus de matière de la coque (**11**) et de la feuille soudable (**17**).

2. Procédé selon la revendication 1, **caractérisé en ce qu'**il consiste à réaliser simultanément les opérations de soudure et de découpe.

3. Procédé selon la revendication 1, caractérisé en ce qu`il consiste à thermoformer la feuille thermoplastique (**10**) afin que la forme des empreintes en creux corresponde à la forme définitive des parties du matelas.

4. Procédé selon la revendication 1, **caractérisé en ce qu'**il consiste à recouvrir la coque thermoformée (**11**) à l'aide d'une feuille soudable (**17**) pré-équipée de systèmes de fixation.

5. Procédé selon l'une des revendications 1 à 4, **caractérisé en ce qu'**il consiste à réaliser des découpes ou ouvertures (**21**) dans la zone d'articulation (**4**) et une soudure entourant chacune de ces découpes ou ouvertures (**21**).

6. Procédé selon la revendication 1, **caractérisé en ce qu'**il consiste à équiper la coque thermoformée (**11**) de systèmes de fixation.

7. Matelas étanche comportant au moins deux parties formant coussins (**2**) reliées par une zone d'articulation (**4**), **caractérisé en ce qu'**il comporte une coque thermoformée (**11**) présentant au moins deux empreintes (**2**) formant par leur fond une première face du matelas, les empreintes (2) étant reliées entre elles par une zone périmétrique de jonction et remplies par un matériau solide (**15**), le matelas étanche comportant une feuille soudable (**17**) formant une deuxième face du matelas, et soudées à la coque par une soudure continue (**16**) formant une lèvre d'assemblage (**20**) s'étendant au moins sur toute la périphérie de chaque empreinte, la lèvre d'assemblage s'étendant en saillie par rapport au matelas.

8. Matelas étanche selon la revendication 7, **caractérisé en ce que** la lèvre d'assemblage (**20**) s'étend sensiblement au niveau de la deuxième face du matelas.

9. Matelas étanche selon les revendications 7 ou 8, **caractérisé en ce que** la zone d'articulation (**4**) s'étend sensiblement au niveau de la deuxième face du matelas.

10. Matelas étanche selon l'une des revendications 7 à 9, **caractérisé en ce que** chaque empreinte de la coque thermoformée (**11**) se présente sous la forme d'une structure monobloc pourvue d'un fond (**12₁**) se prolongeant par une paroi latérale périphérique (**12₂**) dépourvue de plis.

## Patentansprüche

1. Verfahren zur Herstellung einer dichten Matratze (1), umfassend mindestens zwei Kissen bildende Teile (2), die miteinander durch eine Gelenkzone (4) verbunden sind, **dadurch gekennzeichnet, dass** es die folgenden Schritte umfasst:
- Wärmeformen mindestens einer thermoplastischen Folie (10), um eine weiche oder halbstarre wärmegeformte Schale (11) herzustellen, umfassend mindestens zwei hohle Abdrucke (12), die mit einem Umfangsrand (14) versehen sind, von dem gewisse Teile die hohlen Abdrucke miteinander verbinden, wobei sich die beiden Abdrucke entlang einer selben Fläche der so gebildeten Schale öffnen und eine Form aufweisen, die zumindest teilweise den Teilen der Kissen bildenden Matratzenteile entsprechen,
- Füllen der hohlen Abdrucke (12) der wärmegeformten Schale (11) mit einem festen Füllmaterial (15),
- Herstellen einer durchgehenden Schweißnaht auf mindestens der gesamten Peripherie jedes Abdrucks zwischen der Schale und der Schweißfolie (17), die die Schale bedeckt, um die hohlen Abdrucke (12) zu schließen,
- und Abschneiden des Materialüberschusses der Schale (11) und der Schweißfolie (17).

2. Verfahren nach Anspruch 1, **dadurch gekennzeichnet, dass** es darin besteht, die Vorgänge des Schweißens und des Abschneidens gleichzeitig durchzuführen.

3. Verfahren nach Anspruch 1, **dadurch gekennzeichnet, dass** es darin besteht, die thermoplastische Folie (10) wärmezuformen, damit die Form der hohlen Abdrucke der endgültigen Form der Teile der Matratze entspricht.

4. Verfahren nach Anspruch 1, **dadurch gekennzeichnet, dass** es darin besteht, die wärmegeformte Schale (11) mit Hilfe einer Schweißfolie (17), die mit Befestigungssystemen vorausgestattet ist, zu bedecken.

5. Verfahren nach einem der Ansprüche 1 bis 4, **dadurch gekennzeichnet, dass** es darin besteht, Ausschnitte oder Öffnungen (21) in der Gelenkzone (4) und eine Schweißnaht herzustellen, die jeden dieser Ausschnitte oder dieser Öffnungen (21) umgibt.

6. Verfahren nach Anspruch 1, **dadurch gekennzeichnet, dass** es darin besteht, die wärmegeformte Schale (11) mit Befestigungssystemen auszustatten.

7. Dichte Matratze, umfassend mindestens zwei Kissen bildende Teile (2), die durch eine Gelenkzone (4) verbunden sind, **dadurch gekennzeichnet, dass** sie eine wärmegeformte Schale (11) umfasst, die mindestens zwei Abdrucke (2) aufweist, die mit ihrem Boden eine erste Seite der Matratze bilden, wobei die Abdrucke (2) miteinander durch eine Umfangsverbindungszone verbunden und mit einem festen Material (15) gefüllt sind, wobei die dichte Matratze eine Schweißfolie (17) umfasst, die eine zweite Seite der Matratze bildet, und an die Schale durch eine durchgehende Schweißnaht (16) geschweißt sind, die eine Verbindungslippe (20) bildet, die sich zumindest auf der gesamten Peripherie jedes Abdrucks erstreckt, wobei sich die Verbindungslippe in Bezug zur Matratze vorspringende erstreckt.

8. Dichte Matratze nach Anspruch 7, **dadurch gekennzeichnet, dass** sich die Verbindungslippe (20) im Wesentlichen im Bereich der zweiten Seite der Matratze erstreckt.

9. Dichte Matratze nach den Ansprüchen 7 oder 8, **dadurch gekennzeichnet, dass** sich die Gelenkzone (4) im Wesentlichen im Bereich der zweiten Seite der Matratze erstreckt.

10. Dichte Matratze nach einem der Ansprüche 7 bis 9, **dadurch gekennzeichnet, dass** jeder Abdruck der wärmegeformten Schale (11) in Form einer einstückigen Struktur vorhanden ist, die mit einem Boden (12₁) versehen ist, der sich durch eine seitliche Umfangswand (12₂) ohne Falze verlängert.

## Claims

1. A method of fabricating a waterproof mattress (1) having at least two cushion-forming portions (2) that are connected together by a hinge zone (4), the method being **characterized in that** it comprises the following steps:
transforming at least one thermoplastic sheet (10) so as to form a flexible or semirigid thermoformed shell (11) having at least two indentations (12) provided with respective peripheral margins (14) including portions connecting together the indentations, the two indentations opening out into the same face of the shell as formed in this way and presenting a shape that corresponds at least in part to the cushion-forming portions of the mattress;
filling the indentations (12) of the thermoformed shell (11) with a solid upholstery material (15);
making a continuous weld over at least the entire periphery of each indentation between the shell and a weldable sheet (17) covering the shell in order to chose the indentations (12); and
cutting away surplus material from the shell (11) and the weldable sheet (17).

2. A method according to claim 1, **characterized in that** it consists in performing the welding and cutting operations simultaneously.

3. A method according to claim 1, **characterized in that** it consists in thermoforming the thermoplastic sheet (10) so that the shape of the indentations corresponds to the final shape of the mattress portions.

4. A method according to claim 1, **characterized in that** it consists in covering the thermoformed shell (11) with a weldable sheet (17) that is prefitted with fastener systems.

5. A method according to any one of claims 1 to 4, **characterized in that** it consists in making cutouts or openings (21) in the hinged zone (4) and in welding around each of these cutouts or openings (21).

6. A method according to claim 1, **characterized in that** it consists in fitting the thermoformed shell (11) with fastener systems.

7. A waterproof mattress comprising at least two cushion-forming portions (2) connected together by a hinged zone (4), the mattress being **characterized in that** it comprises a thermoformed shell (11) presenting at least two indentations (2) having bottom walls that form a first face of the mattress, the indentations (2) being connected together by a peripheral junction zone and being filled with a solid material (15), the waterproof mattress including a weldable sheet (17) forming a second face of the mattress that is welded to the shell by a continuous weld (16) forming an assembly lip (20) extending at least over the entire periphery of each indentation, the assembly lip projecting from the mattress.

8. A waterproof mattress according to claim 7, **characterized in that** the assembly lip (20) extends substantially from the second face of the mattress.

9. A waterproof mattress according to claim 7 or claim 8, **characterized in that** the hinged zone (4) extends substantially at the level of the second face of the mattress.

10. A waterproof mattress according to any one of claims 7 to 9, **characterized in that** each indentation of the thermoformed shell (11) is in the form of a single-piece structure having a bottom wall (12₁) that is extended by a peripheral side wall (12₂) that does not include any folds.
